# EUROPÄISCHE PATENTSCHRIFT

(11) **EP 1 282 788 B1**
(45) Veröffentlichungstag und Bekanntmachung des Hinweises auf die Patenterteilung: **17.11.2004**
(21) Anmeldenummer: 01936372.0
(22) Anmeldetag: 17.05.2001
(51) Int. Cl.: F16F 13/16

(54) **HYDRAULISCH DÄMPFENDE BUCHSE**
HYDRAULICALLY DAMPING BUSH
DOUILLE A AMORTISSEMENT HYDRAULIQUE

(30) Priorität: 18.05.2000 DE 10024536
(43) Veröffentlichungstag der Anmeldung: 12.02.2003
(73) Patentinhaber: Trelleborg Automotive Technical Centre GmbH, 56203 Höhr-Grenzhausen (DE)
(72) Erfinder: GRAEVE, Arndt, 56068 Koblenz (DE)
(74) Vertreter: Preissner, Nicolaus, Dipl.-Ing.
(86) Internationale Anmeldenummer: PCT/EP2001/005680
(87) Internationale Veröffentlichungsnummer: WO 2001/088405

(56) Entgegenhaltungen:
- EP-A- 0 199 240
- DE-A- 19 632 098
- US-A- 4 899 997
- US-A- 4 953 833
- US-A- 5 005 810
- US-A- 5 232 209
- US-A- 6 007 059
- PATENT ABSTRACTS OF JAPAN vol. 009, no. 111 (M-379), 15. Mai 1985 (1985-05-15) -& JP 59 231236 A (HONDA GIKEN KOGYO KK), 25. Dezember 1984 (1984-12-25)
- PATENT ABSTRACTS OF JAPAN vol. 012, no. 036 (M-664), 3. Februar 1988 (1988-02-03) & JP 62 188832 A (TOYODA GOSEI CO LTD), 18. August 1987 (1987-08-18)

## Beschreibung

Die vorliegende Erfindung betrifft eine hydraulisch dämpfende Buchse, insbesondere zur Verwendung in einem Kraftfahrzeug, zum Abdämpfen von Belastungen in einer Hauptbelastungsrichtung mit einer Innenhülse, einer Außenhülse, einer zwischen Innenhülse und Außenhülse angeordneten Tragfedereinheit, mindestens einem Abschlußstück, das die Innenhülse mit der Außenhülse verbindet und den von der Innenhülse und der Außenhülse umschlossenen Raum gegenüber der Umgebung begrenzt, und zwei Kammern, die mit einer hydraulisch dämpfenden Flüssigkeit gefüllt und über einen Überströmkanal, der einen Eintritt und einen Austritt aufweist, verbunden sind, wobei die Hauptbelastungsrichtung parallel zu einer Längsachse der Innenhülse und der Außenhülse verläuft und wobei die Abschlußstücke getrennt von der Tragfedereinheit ausgebildet sind und jede der Kammern von der Tragfedereinheit oder einem an die Tragfedereinheit angrenzenden Bauteil und einem der Abschlußstücke begrenzt ist.

Eine derartige Buchse wird in der US 5,005,810 offenbart. Die bekannte Axialbuchse ist mit einer Innenhülse und mit einer Außenhülse versehen, die über eine Tragfeder verbunden sind. Die Tragfeder weist einen Raum auf, in dem zwei über eine Zwischenplatte getrennte Kammern vorgesehen sind. Die Zwischenplatte verbindet die beiden Kammern mittels eines einen Eintritt und einen Austritt aufweisenden Überströmkanals.

Eine hydraulisch dämpfende Buchse wird ferner in der DE 36 32 612 A1 beschrieben. Die bekannte Buchse weist eine Innenhülse, eine Außenhülse und ein Zwischenstück mit einem Überströmkanal auf. Es sind weiter Abschlußstücke vorgesehen. Eines der Abschlußstücke ist materialeinstückig mit der Innenhülse hergestellt, und das andere ist starr mit dieser verbunden. Zum Abschluß der Kammern gegenüber der Umgebung sind zwischen den Abschlußstücken und der Außenhülse Gummiringe vorgesehen. Die Gummiringe müssen zur Abdichtung mit den Abschlußstücken und der Außenhülse verbunden werden. Ihre Länge variiert in Abhängigkeit von der Länge der Innenhülse.

Eine andere hydraulisch dämpfende Buchse ist zudem in der US 5,890,706 dargestellt. Diese Druckschrift zeigt eine hydraulisch dämpfende Axialbuchse mit einer Innenhülse und einer Außenhülse, die über eine Tragfeder verbunden sind. Die Tragfeder steht an einer Seite mit der Umgebung in Kontakt. Auf der anderen Seite der Tragfeder sind zwei über eine Zwischenplatte getrennte Kammern vorgesehen, die mit einer hydraulischen Flüssigkeit gefüllt sind. Zum Abschluß der zweiten Kammer gegenüber der Umgebung dient eine dünne, gummielastische Membran, die einteilig mit der Tragfeder ausgebildet ist. Auch hier ergeben sich auf Grund der Verbindung zwischen der Tragfeder und der gummielastischen Membran eine aufwendige Herstellung und Montage.

Aufgabe der vorliegenden Erfindung ist es, eine hydraulisch dämpfende Buchse bereitzustellen, die eine verbesserte hydraulische Dämpfung bei einfacher Montage und Herstellung ermöglicht.

Erfindungsgemäß wird diese Aufgabe bei einer Buchse der eingangs genannten Art dadurch gelöst, daß ein steifes Bauteil der Tragfedereinheit und ein steifes Bauteil des Abschlußstücks einander in einer Richtung senkrecht zur Hauptbelastungsrichtung überlappen, wobei der Eintritt und der Austritt des Überströmkanals im Überlappungsbereich der steifen Bauteile von Tragfedereinheit und Abschlußstücken liegen.

Da sich ein steifes Bauteil der Tragfedereinheit und ein steifes Bauteil des Abschlußstücks einander in einer Richtung senkrecht zur Hauptbelastungsrichtung überlappen, wird bei Bewegungen zwischen der Innenhülse und der Außenhülse ein Pumpeffekt erzielt. Dieser Pumpeffekt begünstigt das Eintreten der hydraulischen Flüssigkeit in den Überströmkanal, verbessert die Strömung durch den Überströmkanal und erhöht die hydraulische Dämpfung.

Der Eintritt und der Austritt des Überströmkanals liegen im Überlappungsbereich der steifen Bauteile der Tragfedereinheit und des Abschlußstükkes. Der auf Grund der Überlappung auftretende Pumpeffekt wirkt daher gezielt auf den Überströmkanal, so daß die hydraulische Dämpfung weiter verbessert wird.

Die getrennte Ausbildung der Abschlußstücke einerseits und der Innenhülse sowie der Außenhülse und der Tragfedereinheit andererseits ermöglicht die Verwendung unterschiedlicher Materialien, die für den Einsatz in der Tragfedereinheit oder den Abschlußstücken optimiert sind. Die Tragfedereinheit und die Abschlußstücke können getrennt voneinander hergestellt und einfach montiert werden. Es ergibt sich daher ein modularer Aufbau der erfindungsgemäßen Buchse. Bevorzugt sind dabei die Abschlußstücke auch von der Innenhülse und der Außenhülse getrennt ausgebildet.

Die Kammern werden entweder von der Tragfedereinheit und den Abschlußstücken oder den an die Tragfedereinheit angrenzenden Bauteilen und den Abschlußstücken begrenzt. Diese Bauteile können insbesondere als Entkopplung oder Panscher ausgeführt werden. Sie ermöglichen eine Anpassung der Eigenschaften der erfindungsgemäßen Buchse an die jeweiligen Randbedingungen.

Die Tragfedereinheit ist hierbei von den beiden Kammern, der Innenhülse und der Außenhülse umschlossen und steht nicht mit der Umgebung in Kontakt. Bei den bekannten Buchsen ist die Tragfeder stets der Umgebung ausgesetzt, so daß ein besonderes Material verwendet werden muß. Bei der erfindungsgemäßen Buchse ist dies nicht mehr erforderlich.

Vorteilhafte Ausgestaltungen und Weiterbildungen der Erfindung gehen aus den abhängigen Ansprüchen hervor.

Nach einer vorteilhaften Weiterbildung sind die Tragfedereinheit und die Abschlußstücke in Hauptbelastungsrichtung hintereinander angeordnet. Hierdurch ergibt sich ein einfacher Aufbau der erfindungsgemäßen Buchse.

In vorteilhafter Ausgestaltung sind die Tragfedereinheit und die Abschlußstücke auf die Innenhülse aufgeschoben und durch Umbördeln der Enden der Innenhülse fixiert. Hierdurch ergibt sich eine einfache Montage. Weiter können unterschiedliche Tragfedereinheiten und Abschlußstücke miteinander kombiniert werden, so daß ein modularer Aufbau der Buchse erreicht wird.

Nach einer alternativen vorteilhaften Ausgestaltung sind die Tragfedereinheit und die Innenhülse zu einem Innenteil zusammengefaßt, auf das die Anschlußstücke aufgeschoben und durch Umbördeln der Enden des Innenteils fixiert sind. Durch das Zusammenfassen der Tragfedereinheit und der Innenhülse wird die Anzahl der Montageschritte verringert.

Alternativ kann die Tragfeder direkt an die Innenhülse und die Außenhülse anvulkanisiert werden. Nach dem Aufschieben der Abschlußstücke müssen nur noch die Enden umgebördelt werden. Der Montageaufwand wird weiter verringert.

Vorteilhaft ist die Außenhülse durch Umbördeln ihrer Enden fixiert. Die Montage ist einfach und zuverlässig.

In vorteilhafter Weiterbildung ist der Überströmkanal in der Tragfedereinheit angeordnet. Die Verwendung eines separaten Bauteils zur Ausbildung des Überströmkanals ist nicht erforderlich.

Der Überströmkanal kann geradlinig ausgebildet werden und im wesentlichen parallel zur Hauptbelastungsrichtung verlaufen. Hierdurch ergibt sich eine einfache Herstellung sowie gute Beaufschlagung des Überströmkanals. Es wird daher eine verbesserte hydraulische Dämpfung der erfindungsgemäßen Buchse erreicht.

Alternativ kann der Überströmkanal spiralförmig ausgebildet werden. Hierdurch werden eine größere Länge und eine höhere Dämpfung erreicht.

Vorteilhaft weist die Buchse zusätzlich eine Entkopplung und/oder einen Panscher auf. Hierdurch wird das Verhalten der Buchse unter Last weiter verbessert, insbesondere im höheren Frequenzbereich.

In vorteilhafter Ausgestaltung sind die Tragfedereinheit, die Abschlußstükke sowie gegebenenfalls eine Entkopplung und ein Panscher rotationssymmetrisch ausgebildet. Die rotationssymmetrische Ausbildung führt zu einer einfachen Herstellung und Montage.

Nach einer vorteilhaften Weiterbildung ist die Innenhülse oder das Innenteil mit einer Öffnung zum Befüllen der Kammer mit hydraulisch dämpfender Flüssigkeit versehen. Die Öffnung ist durch das Anordnen an der Innenhülse oder dem Innenteil geschützt.

Vorteilhaft ist die Öffnung nach dem Zusammenbau der Buchse durch eines der Abschlußstücke verschlossen. Das bisher erforderliche Einpressen einer Kugel in die Öffnung kann entfallen.

Gemäß einer vorteilhaften Weiterbildung ist mindestens eines der Anschlußstücke mit einer Öffnung zum Befüllen der Kammer mit hydraulisch dämpfender Flüssigkeit versehen. Hierdurch ergibt sich ein einfaches Befüllen. Es können auch sowohl eine Öffnung an der Innenhülse oder dem Innenteil sowie an einem der Abschlußstücke vorgesehen werden.

Nachstehend wird die Erfindung an Hand von Ausführungsbeispielen näher beschrieben, die schematisch in der Zeichnung dargestellt sind. Für gleiche oder funktionsidentische Bauteile werden durchgehend dieselben Bezugszeichen verwendet. Dabei zeigt:
- Figur 1: einen Längsschnitt durch eine erste Ausgestaltung einer erfindungsgemäßen Buchse;
- Figur 2: einen Längsschnitt durch eine zweite Ausgestaltung einer erfindungsgemäßen Buchse; und
- Figur 3: eine Zusammenstellung von Einzelteilen der Buchse im Längsschnitt.

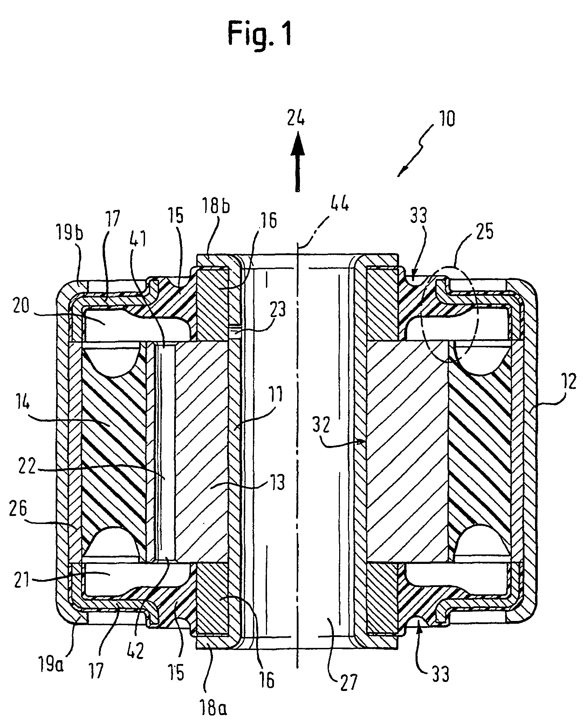

Figur 1 zeigt einen Längsschnitt durch eine erste Ausgestaltung einer erfindungsgemäßen Buchse 10 mit einer Innenhülse 11 mit einem Innenraum 27 und einer Außenhülse 12. Zwischen den Hülsen 11, 12 sind eine Tragfedereinheit 32 sowie zwei Abschlußstücke 33 angeordnet. Die Tragfedereinheit 32 ist hierbei getrennt von den Abschlußstücken 33 ausgebildet. Die Buchse 10 kann als Federbeinlager zum Einsatz kommen oder bei einem Fahrwerk als axial dämpfende Buchse eingesetzt werden.

Zwischen der Tragfedereinheit 32 und jedem der Abschlußstücke 33 wird eine Kammer 20, 21 gebildet. Die beiden Kammern 20, 21 sind mit einer hydraulischen dämpfenden Flüssigkeit gefüllt und stehen über einen Überströmkanal 22 der Tragfedereinheit 32 in Verbindung. Die Tragfedereinheit 32 umfaßt einen Lagerkern 13, eine Tragfeder 14 sowie eine äußere Hülse 26. Der Lagerkern 13 und die äußere Hülse 26 sind hierbei im Vergleich zur Tragfeder 14 steif ausgebildet. Der Überströmkanal 22 ist im Lagerkern 13 angeordnet und verläuft im dargestellten Ausführungsbeispiel im wesentlichen gradlinig und parallel zu einer Hauptbelastungsrichtung 24 der Buchse 10. Diese Hauptbelastungsrichtung 24 verläuft parallel zu einer Längsachse 44 der Innenhülse 11 und der Außenhülse 12.

Die Abschlußstücke 33 weisen eine Membran 15, einen inneren Ring 16 sowie einen zur Versteifung dienenden Einsatz 17 auf. Die Membran 15 ist vollständig getrennt von der Tragfeder 14 hergestellt und besteht aus einem anderen Material.

Der Lagerkern 13 und der Einsatz 17 überlappen einander in einer Richtung senkrecht zur Hauptbelastungsrichtung 24. Der Überlappungsbereich ist schematisch in Strichlinien 25 angedeutet. Eintritt 41 und Austritt 42 des Überströmkanals 22 liegen im Überlappungsbereich 25.

Unter Belastung werden die Innenhülse 11 und die Außenhülse 12 in Hauptbelastungsrichtung 24 gegeneinander verschoben. Hierdurch ändert sich das Volumen der Kammern 21, 22, so daß die hydraulische Flüssigkeit durch den Überströmkanal 22 strömt. Die auftretende hydraulische Dämpfung wirkt der äußeren Belastung entgegen.

Auf Grund der Überlappung der steifen Bauteile 13, 17 tritt ein Pumpeffekt auf, der das Eintreten der hydraulischen Flüssigkeit in den Überströmkanal 22 begünstigt. Da Eintritt 41 und Austritt 42 im Überlappungsbereich 25 angeordnet sind, führt die im Überlappungsbereich 25 auftretende Druckerhöhung zu einer verbesserten Strömung der Flüssigkeit im Überströmkanal 22 und damit zu einer nochmals verbesserten hydraulischen Dämpfung.

Die Tragfedereinheit 32 und die Abschlußstücke 33 werden durch umgebördelte Enden 18a, 18b, 19a, 19b der Innenhülse 11 und der Außenhülse 12 fixiert. Zur Montage werden die unteren Enden 18a, 19a in die in Figur 1 dargestellte Position umgebördelt. Anschließend werden das untere Abschlußstück 33, die Tragfedereinheit 32 und das obere Abschlußstück 33 auf die Innenhülse 11 aufgeschoben. Gleichzeitig oder danach wird die Außenhülse 12 aufgesteckt. Die Ringe 16 der Abschlußstücke 33 und der Lagerkern 11 der Tragfedereinheit 32 weisen hierbei denselben Innendurchmesser auf. Der Außendurchmesser der Hülse 26 entspricht dem Außendurchmesser der Abschlußstükke 33. Der Außendurchmesser der Innenhülse 11 und der Innendurchmesser der Außenhülse 12 werden passend ausgewählt. Auf diese Weise wird ein sicherer, dichter Sitz erreicht. Anschließend wird das obere Ende 19b der Außenhülse 12 umgebördelt. Das obere Ende 18b der Innenhülse wird vorläufig noch nicht umgebördelt. Der Ring 16 der oberen Abschlußstücks 33 kann daher noch auf der Innenhülse 11 in Hauptbelastungsrichtung 24 verschoben werden.

Zum Befüllen der Kammern 20, 21 sowie des Überströmkanals 22 ist die Innenhülse 11 mit einer Öffnung 23 versehen. Für den Befüllvorgang wird der Ring 16 des oberen Abschlußstücks 33 nach oben abgehoben. Anschließend wird über eine nicht näher dargestellte Einrichtung die enthaltene Luft abgesaugt und die hydraulische Flüssigkeit eingefüllt. Nach Abschluß des Einfüllens wird der Ring 16 wieder nach unten verschoben und verschließt hierbei die Öffnung 23. Danach werden die oberen Enden 18b der Innenhülse 11 in die in Figur 1 gezeigte Position umgebördelt. Das Einpressen einer Kugel zum Verschließen der Öffnung 23 ist nicht mehr erforderlich.

Die Tragfedereinheit 32 sowie die Abschlußstücke 33 sind rotationssymmetrisch ausgebildet und in Hauptbelastungsrichtung 24 hintereinander angeordnet. Eine bestimmte Winkelstellung zwischen der Tragfedereinheit 32 und den Abschlußstücken 33 ist nicht erforderlich. Die Montage kann daher rasch und einfach durchgeführt werden.

Durch eine Festlegung des Innendurchmessers und des Außendurchmessers der Tragfedereinheit 32 und der Abschlußstücke 33 können unterschiedliche Einzelteile der erfindungsgemäßen Buchse 10 miteinander kombiniert werden. In Abhängigkeit von den Randbedingungen werden daher eine oder auch mehrere geeignete Tragfedereinheiten 32 und Abschlußstücke 33 ausgewählt und montiert.

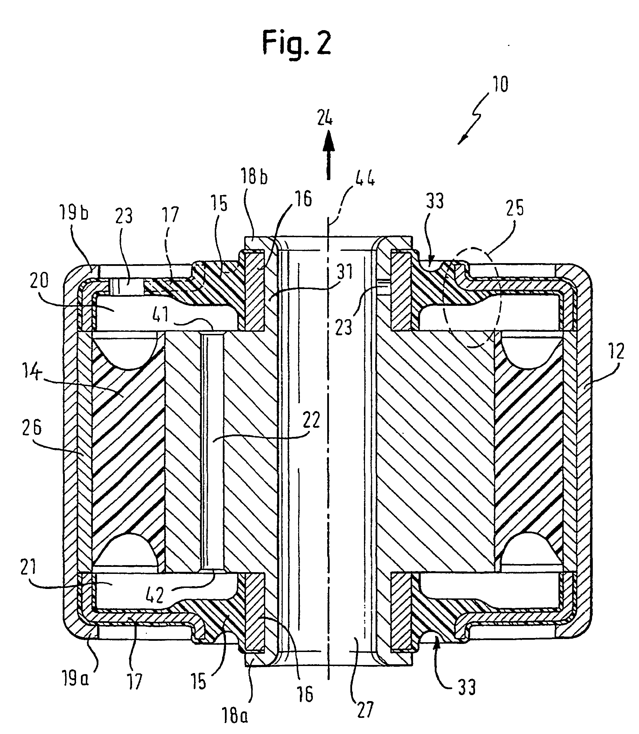

Figur 2 zeigt eine zweite Ausgestaltung einer erfindungsgemäßen Buchse 10 in einer Ansicht ähnlich Figur 1. Bei dieser Ausgestaltung sind die Tragfedereinheit 32 und die Innenhülse 11 zu einem Innenteil 31 zusammengefaßt. Die Abschlußstücke 33 werden zur Montage auf das Innenteil 31 aufgeschoben und anschließend durch Umbördeln der Enden 18a, 18b des Innenteils fixiert. Zum Befüllen dient wiederum eine Öffnung 23, die entweder an dem Innenteil oder an einem der Abschlußstücke 33 angeordnet ist. Die weiteren Bauteile sind mit denjenigen der Figur 1 identisch, so daß zu Vermeidung von Wiederholungen auf obige Ausführungen verwiesen wird.

Gemäß einer weiteren Ausgestaltung wird das in Figur 2 dargestellte Innenteil 31 mit der Außenhülse 12 durch Einvulkanisieren der Tragfeder 14 verbunden. Die äußere Hülse 26 entfällt dann.

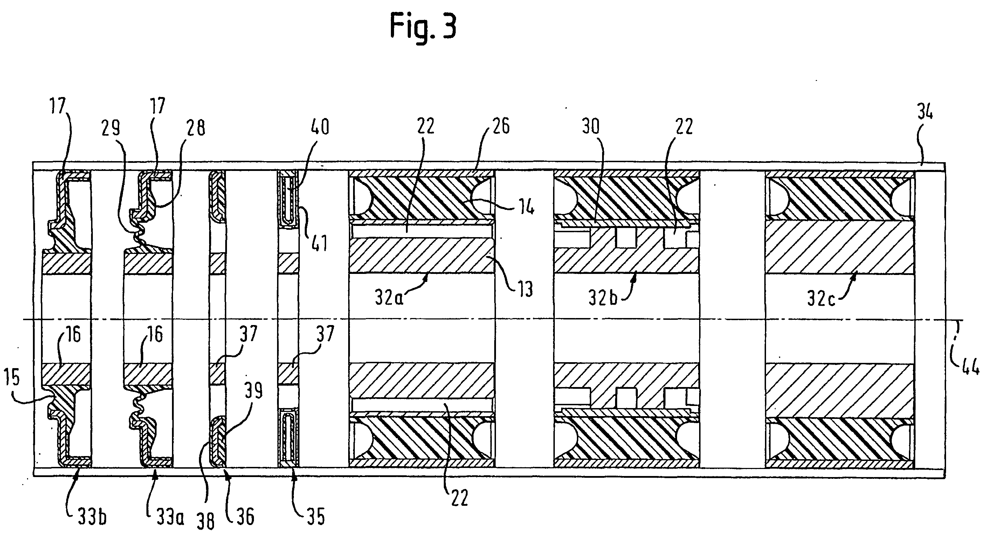

Figur 3 zeigt eine Zusammenstellung von Einzelteilen der Buchse 10 in einer Hülse 34 im Längsschnitt. Es sind drei unterschiedliche Tragfedereinheiten 32a, 32b, 32c dargestellt. Bei der Tragfedereinheit 32a sind zwei geradlinige Überströmkanäle 22 vorgesehen. Demgegenüber weist die Tragfedereinheit 32b einen spiralförmig entlang des Lagerkerns 11 verlaufenden Überströmkanal 22 auf. Zur Tragfeder 14 hin kann der Überströmkanal 22 mit einer weiteren Hülse 30 abgedeckt sein. Die Spiralform bewirkt eine Verlängerung des Überströmkanals 22 und damit eine Vergrößerung der hydraulischen Dämpfung.

Bei der Tragfedereinheit 32c ist kein Überströmkanal vorgesehen. Die Verbindung zwischen den beiden Kammern 20, 21 erfolgt dann über einen separat ausgebildeten, nicht näher dargestellten Überströmkanal.

Zur Anpassung an unterschiedliche Randbedingungen wird eine der dargestellten Tragfedereinheiten 32a, 32b, 32c ausgewählt. Innendurchmesser und Außendurchmesser sind wie in Figur 3 dargestellt identisch. Es können allerdings Tragfedereinheiten 32 unterschiedlicher Länge, unterschiedlicher Steifigkeit der Tragfeder 14, unterschiedlicher Größe der Ausnehmungen an der Tragfeder 14 sowie mit unterschiedlichen Überströmkanälen 22 verwendet werden. Es ist insbesondere die Verwendung einer Tragfedereinheit 32a mit zwei oder mehr Überströmkanälen 22 möglich.

Weiter können unterschiedliche Typen von Abschlußstücken 33a, 33b vorgesehen sein. Das Abschlußstück 33b entspricht dem in Figur 1 und 2 dargestellten. Es ist vergleichsweise steif ausgeführt, da die Membran 15 relativ dick ist. Alternativ ist auch der Verwendung eines Anschlußstücks 33a mit weicher Charakteristik möglich. Anstelle der Membran 15 wird eine dünne Membran 29 in Kombination mit einer als Anschlag dienenden Verdickung 28 auf der Innenseite des Einsatzes 17 vorgesehen. Der Innendurchmesser der Ringe 16 sowie der Außendurchmesser sind hierbei identisch.

Zur Verbesserung des Lagerverhaltens können weiter eine Entkopplung 35 und/oder ein Panscher 36 vorgesehen werden. Die Entkopplung 35 weist einen Distanzring 37 sowie eine hohle Membran 40 in einem Käfig 41 auf. Der Käfig 41 ist mit nicht näher dargestellten Öffnungen versehen, so daß die Außenseite der Membran 40 von der hydraulischen Flüssigkeit beaufschlagt wird. Belastungen der Buchse 10 mit kleiner Amplitude führen zu einer Kompression der Membran 40 ohne Strömung durch den Überströmkanal 22. Die Buchse 10 ist daher relativ weich. Erst bei Belastungen mit größerer Amplitude tritt auch eine Strömung durch den Überströmkanal 22 auf, deren hydraulische Dämpfung der Belastung entgegenwirkt. Die axiale Ausdehnung des Distanzrings 37 entspricht der des Käfigs 41.

Der Panscher 36 weist einen Einsatz 38 zur Versteifung mit einem Überzug 39 auf. Auch hier ist ein Distanzring 37 vorgesehen. Bei der Belastung des Lagers bewegt sich der Panscher 36 gegenüber dem Distanzring 37, so daß zusätzlich eine hydraulische Dämpfung in dem Spalt zwischen dem Panscher 36 und dem Distanzring 37 erzielt wird.

Die Distanzringe 37 dienen sowohl bei der Entkopplung 35 als auch bei dem Panscher 36 als Anlageflächen für die Ringe 16 und den oder die Lagerkerne 13. Es wird sichergestellt, daß die axialen Abmessungen an der Innenhülse 11 den Abmessungen an der Außenhülse 12 entsprechen. In besonderen Ausgestaltungen kann allerdings auch auf einen oder beide Distanzringe 37 verzichtet werden. Die Ringe 16 der Abschlußstücke sind dann axial einwärts zum Lagerkern 13 hin versetzt.

Die erfindungsgemäße Buchse 10 weist eine wesentlich verbesserte Dämpfungswirkung auf, die auf die Überlappung des Lagerkerns 13 und des Einsatzes 17 zurückzuführen ist. Weiter ist die Tragfeder 14 gegenüber der Umgebung vollständig abgeschlossen und von den Abschlußstücken 33 getrennt. Es können daher unterschiedliche Materialien für die Tragfeder 14 und die Membran 15, 29 verwendet werden. Die Montage kann rasch und einfach durchgeführt werden. Durch die Trennung zwischen der Tragfedereinheit 32 und den Abschlußstücken 33 wird weiter ein modularer Aufbau der Buchse 10 erreicht, der eine Anpassung an unterschiedliche Randbedingungen ermöglicht.

## Patentansprüche

1. Hydraulisch dämpfende Buchse, insbesondere zur Verwendung in einem Kraftfahrzeug, zum Abdämpfen von Belastungen in einer Hauptbelastungsrichtung (24) mit einer Innenhülse (11), einer Außenhülse (12), einer zwischen Innenhülse (11) und Außenhülse (12) angeordneten Tragfedereinheit (32), mindestens einem Abschlußstück (33), das die Innenhülse (11) mit der Außenhülse (12) verbindet und den von der Innenhülse (11) und der Außenhülse (12) umschlossenen Raum gegenüber der Umgebung begrenzt, und zwei Kammern (20, 21), die mit einer hydraulisch dämpfenden Flüssigkeit gefüllt und über einen Überströmkanal (22), der einen Eintritt (41) und einen Austritt (42) aufweist, verbunden sind, wobei die Hauptbelastungsrichtung (24) parallel zu einer Längsachse (44) der Innenhülse (11) und der Außenhülse (12) verläuft und wobei die Abschlußstücke (33) getrennt von der Tragfedereinheit (32) ausgebildet sind und jede der Kammern (20; 21) von der Tragfedereinheit (32) oder einem an die Tragfedereinheit (32) angrenzenden Bauteil (35; 36) und einem der Abschlußstücke (33) begrenzt ist, **dadurch gekennzeichnet, daß** ein steifes Bauteil (13) der Tragfedereinheit (32) und ein steifes Bauteil (17) des Abschlußstücks (33) einander in einer Richtung senkrecht zur Hauptbelastungsrichtung (24) überlappen, wobei der Eintritt (41) und der Austritt (42) des Überströmkanals (22) im Überlappungsbereich (25) der steifen Bauteile (13, 17) von Tragfedereinheit (32) und Abschlußstücke (33) liegen.

2. Buchse nach Anspruch 1, **dadurch gekennzeichnet, daß** die Tragfedereinheit (32) und die Abschlußstücke (33) in Hauptbelastungsrichtung (24) hintereinander angeordnet sind.

3. Buchse nach Anspruch 1 oder 2, **dadurch gekennzeichnet, daß** die Tragfedereinheit (32) und die Abschlußstücke (33) auf die Innenhülse (11) aufgeschoben und durch Umbördeln der Enden (18) der Innenhülse (11) fixiert sind.

4. Buchse nach Anspruch 1 oder 2, **dadurch gekennzeichnet, daß** die Tragfedereinheit (32) und die Innenhülse (11) zu einem Innenteil (31) zusammengefaßt sind, auf das die Anschlußstücke (33) aufgeschoben und durch Umbördeln der Enden (18) des Innenteils (31) fixiert sind.

5. Buchse nach einem der Ansprüche 1 bis 4, **dadurch gekennzeichnet, daß** die Außenhülse (12) durch Umbördeln ihrer Enden (19) fixiert ist.

6. Buchse nach einem der Ansprüche 1 bis 5, **dadurch gekennzeichnet, daß** der Überströmkanal (22) in der Tragfedereinheit (32) angeordnet ist.

7. Buchse nach einem der Ansprüche 1 bis 6, **dadurch gekennzeichnet, daß** der Überströmkanal (22) geradlinig ausgebildet ist und im wesentlichen parallel zur Hauptbelastungsrichtung (24) .verläuft.

8. Buchse nach einem der Ansprüche 1 bis 6, **dadurch gekennzeichnet, daß** der Überströmkanal (22) spiralförmig ausgebildet ist.

9. Buchse nach einem der Ansprüche 1 bis 8, **dadurch gekennzeichnet, daß** die Buchse (10) zusätzlich eine Entkopplung (35) und/oder einen Panscher (36) aufweist.

10. Buchse nach einem der Ansprüche 1 bis 9, **dadurch gekennzeichnet, daß** die Tragfedereinheit (32), die Abschlußstücke (33) sowie gegebenenfalls eine Entkopplung (35) und ein Panscher (36) rotationssymmetrisch ausgebildet sind.

11. Buchse nach einem der Ansprüche 1 bis 10, **dadurch gekennzeichnet, daß** die Innenhülse (11) oder das Innenteil (31) mit einer Öffnung (23) zum Befüllen der Kammern (20, 21) mit hydraulisch dämpfender Flüssigkeit versehen ist.

12. Buchse nach Anspruch 11, **dadurch gekennzeichnet, daß** die Öffnung (23) nach dem Zusammenbau der Buchse (10) durch eines der Abschlußstücke (33) verschlossen ist.

13. Buchse nach einem der Ansprüche 1 bis 12, **dadurch gekennzeichnet, daß** mindestens eines der Abschlußstücke (33) mit einer Öffnung (23) zum Befüllen der Kammern (20, 21) mit hydraulisch dämpfender Flüssigkeit versehen ist.

## Claims

1. A hydraulic damping bush, more particularly in automotive applications, for damping loads in a main loading direction (24), comprising an inner sleeve (11), an outer sleeve (12), a resilient mounting assembly (32) disposed between inner sleeve (11) and outer sleeve (12), at least one end cap (33) connecting the inner sleeve (11) to the outer sleeve (12) and capping the space enclosed by the inner sleeve (11) and outer sleeve (12) from the environment, and two chambers (20, 21) charged with a hydraulic damping fluid and interconnected via a transfer duct (22) including an inlet (41) and an outlet (42), the main loading direction (24) being oriented parallel to a longitudinal axis (44) of the inner sleeve (11) and the outer sleeve (12), the end caps (33) being formed separate from the resilient mounting assembly (32) and each of the chambers (20, 21) is defined by the resilient mounting assembly (32) or a component (35; 36) adjoining the resilient mounting assembly or by one of the end caps (33), **characterized in that** a rigid member (13) of the resilient mounting assembly (32) and a rigid member (17) of the end cap (33) overlap in a direction perpendicular to the main loading direction (24), wherein the inlet (41) and outlet (42) of the transfer duct (22) are located in the overlapping portion (25) of the rigid members (13, 17) of the resilient mounting assembly (32) and the end caps (33).

2. The bush as set forth in claim 1, **characterized in that** the resilient mounting assembly (32) and the end caps (33) are arranged inline in the main loading direction (24).

3. The bush as set forth in claim 1 or 2, **characterized in that** the resilient mounting assembly (32) and the end caps (33) are mounted on the inner sleeve (11) and fixed by flanging the rims (18) of the inner sleeve (11).

4. The bush as set forth in claim 1 or 2, **characterized in that** the resilient mounting assembly (32) and the inner sleeve (11) are grouped together into a single inner part (31), on which the end caps (33) are mounted and fixed by flanging the rims (18) of the inner part (31).

5. The bush as set forth in any of the claims 1 to 4, **characterized in that** the outer sleeve (12) is fixed by its rims (19) being flanged.

6. The bush as set forth in any of the claims 1 to 5, **characterized in that** the transfer duct (22) is arranged in the resilient mounting assembly (32).

7. The bush as set forth in any of the claims 1 to 6, **characterized in that** the transfer duct (22) is configured linear and oriented substantially parallel to the main loading direction (24).

8. The bush as set forth in any of the claims 1 to 6, **characterized in that** the transfer duct (22) is configured helical.

9. The bush as set forth in any of the claims 1 to 8, **characterized in that** the bush (10) comprises additionally a decoupling means (35) and/or a plunger (36).

10. The bush as set forth in any of the claims 1 to 9, **characterized in that** the resilient mounting assembly (32), the end caps (33), as well as any decoupling means (35) or plunger (36) provided are configured rotationally symmetrical.

11. The bush as set forth in any of the claims 1 to 10, **characterized in that** the inner sleeve (11) or the inner part (31) is provided with a port (23) for charging the chambers (20, 21) with hydraulic damping fluid.

12. The bush as set forth in claim 11, **characterized in that** the port (23) is closed off by one of the end caps (33) following assembly of the bush (10).

13. The bush as set forth in any of the claims 1 to 12, **characterized in that** at least one of the end caps (33) is provided with a port (23) for charging the chambers (20, 21) with hydraulic damping fluid.

## Revendications

1. Douille à amortissement hydraulique, en particulier pour l'utilisation dans un véhicule automobile pour amortir des charges dans une direction de charge principale (24), comportant une gaine intérieure (11), une gaine extérieure (12), un ensemble à ressort porteur (32) agencé entre la gaine intérieure (11) et la gaine extérieure (12), au moins un élément de terminaison (33) qui relie la gaine intérieure (11) à la gaine extérieure (12) et qui délimite par rapport à l'environnement l'espace entouré par la gaine intérieure (11) et par la gaine extérieure (12), et deux chambres (20, 21) qui sont remplies d'un liquide à amortissement hydraulique et qui sont reliées via un canal de déversement (22) présentant une entrée (41) et une sortie (42), la direction de charge principale (24) s'étendant parallèlement à un axe longitudinal (44) de la gaine intérieure (11) et de la gaine extérieure (12), et les éléments de terminaison (33) étant réalisés séparément de l'ensemble à ressort porteur (32) et chacune des chambres (20 ; 21) étant délimitée par l'ensemble à ressort porteur (32) ou par un composant (35 ; 36) adjacent à l'ensemble à ressort porteur (32) et par l'un des éléments de terminaison (33), **caractérisée en ce qu'**un composant rigide (13) de l'ensemble à ressort porteur (32) et un composant rigide (17) de l'élément de terminaison (33) se chevauchent mutuellement dans une direction perpendiculaire à la direction de charge principale (24), l'entrée (41) et la sortie (42) du canal de déversement (22) se trouvent dans la zone de chevauchement (25) des composants rigides (13, 17) de l'ensemble à ressort porteur (32) et des éléments de terminaison (33).

2. Douille selon la revendication 1, **caractérisée en ce que** l'ensemble à ressort porteur (32) et les éléments de terminaison (33) sont agencés les uns derrière les autres en direction de charge principale (24).

3. Douille selon l'une ou l'autre des revendications 1 et 2, **caractérisée en ce que** l'ensemble à ressort porteur (32) et les éléments de terminaison (33) sont enfilés sur la gaine intérieure (11) et sont fixés par rabattement des extrémités (18) de la gaine intérieure (11).

4. Douille selon l'une ou l'autre des revendications 1 et 2, **caractérisée en ce que** l'ensemble à ressort porteur (32) et la gaine intérieure (11) sont réunis en une pièce intérieure (31) sur laquelle les éléments de terminaison (33) sont enfilés et fixés par rabattement des extrémités (18) de la pièce intérieure (31).

5. Douille selon l'une des revendications 1 à 4, **caractérisée en ce que** la gaine extérieure (12) est fixée par rabattement de ses extrémités (19).

6. Douille selon l'une des revendications 1 à 5, **caractérisée en ce que** le canal de déversement (22) est agencé dans l'ensemble à ressort porteur (32).

7. Douille selon l'une des revendications 1 à 6, **caractérisée en ce que** le canal de déversement (22) est réalisé rectiligne et s'étend sensiblement parallèlement à la direction de charge principale (24).

8. Douille selon l'une des revendications 1 à 6, **caractérisée en ce que** le canal de déversement (22) est réalisé en forme spiralée.

9. Douille selon l'une des revendications 1 à 8, **caractérisée en ce que** la douille (10) comprend en supplément des moyens de découplage (35) et/ou un plongeur (36).

10. Douille selon l'une des revendications 1 à 9, **caractérisée en ce que** l'ensemble à ressort porteur (32), les éléments de terminaison (33) ainsi que le cas échéant des moyens de découplage (35) et un plongeur (36) sont réalisés à symétrie de révolution.

11. Douille selon l'une des revendications 1 à 10, **caractérisée en ce que** la gaine intérieure (11) ou la pièce intérieure (31) est pourvue d'une ouverture (23) pour remplir les chambres (20, 21) avec un liquide à amortissement hydraulique.

12. Douille selon la revendication 11, **caractérisée en ce que** l'ouverture (23) est refermée par l'un des éléments de terminaison (33), après assemblage de la douille (10).

13. Douille selon l'une des revendications 1 à 12, **caractérisée en ce que** l'un au moins des éléments de terminaison (33) est pourvu d'une ouverture (23) pour remplir les chambres (20, 21) avec du liquide à amortissement hydraulique.
